(19) Europäisches Patentamt

European Patent Office

Office européen des brevets

(11) **EP 1 249 921 A1**

(12) **EUROPEAN PATENT APPLICATION**

(43) Date of publication:
**16.10.2002 Bulletin 2002/42**

(51) Int Cl.7: **H02K 7/06**, F16H 25/20,
B29C 45/50

(21) Application number: **02008145.1**

(22) Date of filing: **12.04.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Yamada, Tominori**<br>  **Hiroshima-shi, Hiroshima-ken (JP)**<br>• **Ogata, Fumihiro**<br>  **Hiroshima-shi, Hiroshima-ken (JP)** |
| (30) Priority: **13.04.2001 JP 2001115482**<br>        **18.02.2002 JP 2002039978** | (74) Representative: **Schwabe - Sandmair - Marx**<br>**Stuntzstrasse 16**<br>**81677 München (DE)** |
| (71) Applicant: **NAMU Co., Ltd.**<br>**Hiroshima-shi, Hiroshima-ken (JP)** | |

(54) **Electric actuator**

(57) An electric actuator that is structured simply, low in costs and high in both energy efficiency and operation accuracy and is capable of realizing frequent activation and stop is provided. In a return stroke in which a linear actuator is in low load operation state, an energy generated by an electric motor and a kinetic energy generated by movable portions when they stop are absorbed and accumulated by a coil spring. By this constitution, it becomes possible to cause the movable portions of the linear actuator to quickly stop while eliminating the necessity of giving a braking force by an electric or mechanical brake or the like and of providing a configuration designed for giving a braking force in a reliable manner such as one provided as a measure against heat generation. On the other hand, in an actuation stroke, the energy accumulated in the spring is released as operation energy of the movable portions when the spring extends and a driving force required of the electric motor is reduced.

FIG. 1

EP 1 249 921 A1

**Description**

BACKGROUND OF THE INVENTION

1. Field of the Invention

The invention relates to an electric actuator that is suitable for a reciprocating motion at high frequency.

2. Description of the Related Art

An actuator activated by hydraulic pressure is used in many cases as an actuator that reciprocates at a high frequency in medium strokes and is required to have a relatively large actuation force such as those used as a driving device for a cylinder or a pressurizing cylinder of an injection molding machine. However, the demand of the market is rapidly shifting to an electric actuator, in view of the need to save energy and ease of control.

Such an electric actuator includes a linear actuator and a rotary actuator, which reduce a speed of an electric motor rotating at a high speed by a mechanical reduction gear to obtain an output as linear motion and as rotational motion, respectively. The linear actuator converts rotational motion of the electric motor to linear motion by a ball screw or the like and is used with a tip of the ball screw being combined with a driven member. On the other hand, the rotary actuator is used with a driven shaft being combined with a shaft end on a low speed side.

These actuators are required to (1) withstand reciprocation at high frequency, (2) easily and promptly stop at each end of actuation and return strokes, (3) be capable of effectively utilizing energy accumulated in a high-speed motor rotor and (4) be obtained at a low cost.

Incidentally, if a conventional electric actuator (and a hydraulic actuator as well) is used under conditions in which a desired output is required only in one stroke of reciprocation, since a large load acts on the actuator in the one stroke (hereinafter referred to as "actuation stroke"), it is relatively easy to stop it at an end position of the actuation stroke. However, for the other stroke (hereinafter referred to as "return stroke"), since a load does not act, influence of inertia of a movable portion of the actuator increases. Thus, it is necessary to intentionally give a braking force to the actuator in order to be quickly stopped at the end position of the actuation stroke.

For example, in a case of the hydraulic actuator, such a braking force can be given by closing a hydraulic circuit on the return side to cause a counter pressure to act on a cylinder. However, since speeds of a piston and a driven member of the piston are identical in many cases, an inertia mass of the driven member causes a pressure in the cylinder to excessively increase and imposes a large load on the hydraulic circuit.

On the other hand, with the electric actuator, since power of an electric motor is generally outputted via a reduction gear, an inertia moment of movable portions such as a motor rotor is large. Thus, it is necessary to give a braking force to the actuator by utilizing an electric brake, a mechanical electromagnetic brake or the like. However, if these brakes are activated frequently, a large amount of heat is generated, which exponentially reduces the braking force. As a result, it is essential to take diffuse and remove heat.

In addition, when the electric actuator is started, since a large amount of energy is applied to the electric motor in order to accelerate the electric motor to a predetermined number of revolutions in a short time, a large amount of heat is also generated at this point. Thus, if reciprocation at a high frequency is required, unless all possible measures for diffusing and removing heat are taken, seizing of the electric motor may be induced.

Therefore, if the electric actuator is used under conditions in which it is required to be started and stopped in a short cycle time of, for example, several tens of seconds or less, since the electric motor and its control circuit becomes complex and sophisticated, a steep rise in costs is inevitable.

Moreover, kinetic energy accumulated in each movable portion of the electric actuator is emitted as heat via a brake at the time when the electric actuator is stopped. An energy loss due to the emission is not negligible today when energy saving is increasingly demanded.

Furthermore, a specification of each portion of the above-mentioned actuators is determined based solely on a load acting during the actuation stroke, in order to secure mechanical strength and a usable life of the electric motor. Thus, during the return stroke in which a large load is not applied, specifications for the electric motor and many mechanical parts are excessive. This is another factor causing a steep rise in the cost of the conventional electric actuator.

SUMMARY OF THE INVENTION

The invention has been devised in view of the above and other drawbacks, and it is an object of the present invention to provide an electric actuator with a simple and inexpensive structure, which is high in both energy efficiency and operation accuracy, and is capable of realizing frequent starting and stopping operations.

In order to solve the above-mentioned drawback, an electric actuator in accordance with a first aspect of the invention is a reciprocating actuator comprising an energy accumulating device which absorbs and accumulates, by use of a spring, energy generated by an electric motor and kinetic energy generated by movable portions when they stop, during a low load operation of the actuator.

According to the invention, the energy generated by the electric motor and the kinetic energy generated by the movable portions when they stop are absorbed and accumulated during a low load operation, whereby a braking force required for stopping the movable portions can be reduced (or made almost negligible). Thus, it becomes possible to simplify a configuration for giving a braking force and to quickly stop the movable portions of the actuator.

In addition, an electric actuator in accordance with a second aspect of the invention is the electric actuator according to the first aspect, in which the energy accumulating device accumulates energy generated by the electric motor and kinetic energy generated by the movable portions when they stop in a return stroke of the actuator and releases the accumulated energy as an operation energy in an actuation stroke of the actuator.

According to the invention, the kinetic energy of the movable portions is absorbed and accumulated when they are stopped during the return stroke of the actuator, whereby an amount of absorption of a braking force required for stopping the movable portions can be reduced (or made almost negligible). Thus, it becomes possible to simplify a configuration for giving a braking force and cause the movable portions of the actuator to quickly stop. In addition, the energy accumulated in the return stroke of the actuator is released in the actuation stroke so that the energy is recycled, whereby the electric motor can be accelerated to a predetermined number of revolutions in a short time while reducing electric energy applied to it when the electric actuator is started, and moreover, a driving force required of the electric motor in the actuation stroke is reduced.

In addition, an electric actuator in accordance with a third aspect of the invention is the electric actuator according to the first or the second aspect, in which the energy accumulating device is supported by a slide guide provided in the axial direction and includes a guide member which is fixed to a tip of a ball screw driven by the electric motor and moves in the axial direction, and a spring whose one end is engaged with the guide member.

According to the invention, energy generated by the electric motor in the return stroke and kinetic energy generated by the movable portions including the ball screw when they stop are absorbed and accumulated by the spring whose one end is engaged with the slide guide fixed to the tip of the ball screw. Thus, a braking force required for stopping the movable portions can be reduced (or made almost negligible), and can be recycled as the actuation energy and the driving force in the actuation stroke.

In addition, an electric actuator in accordance with a fourth aspect of the invention is the electric actuator according to the third aspect, in which the spring is disposed between the guide member and a casing of a reduction gear for decelerating power of the electric motor and for transmitting it to the ball screw, or a member fixed to the casing.

According to the invention, kinetic energy of the movable portions including the ball screw in the return stroke of the actuator is absorbed and accumulated by the contraction of the spring disposed between the guide member and the casing of the reduction gear or the member fixed to the casing. Thus, a braking force required for stopping the movable portions can be reduced (or made almost negligible). On the other hand, in the actuation stroke of the actuator, the energy accumulated in the spring is released as operation energy of the movable portions when the spring extends. In this way, electric energy required for starting the actuator is reduced. In addition, a driving force required of the electric motor in the actuation stroke is reduced.

In addition, an electric actuator in accordance with a fifth aspect of the invention is the electric actuator according to the third or the fourth aspect, in which the tip of the ball screw and the guide member are fixed via a flexible shaft.

According to the invention, positional dislocation that occurs when the ball screw and the guide member, which are separately constituted based on different assembling standards, are combined with each other is absorbed by a flexure of the flexible shaft. Then, the ball screw and the guide member are surely coupled with each other without imposing stress on either of them, so that transmission of forces between the ball spring and the guide member is reliably carried out.

In addition, an electric actuator in accordance with a sixth aspect of the invention is the electric actuator according to the fifth aspect, in which the flexible shaft is used as a load cell. For example, a distortion of the flexible shaft can be detected by attaching a distortion gage or the like to the flexible shaft.

In addition, an electric actuator in accordance with a seventh aspect of the invention is the electric actuator according to any one of the first to the sixth aspects, in which the actuator is detachably attachable to the driven member integrally.

According to the invention, assembly, transportation, maintenance and the like of the actuator can be performed independently with respect to the driven member of the actuator.

In addition, an electric actuator in accordance with an eighth aspect of the invention is the electric actuator according to any one of the first to the seventh aspects, in which an induction motor driven by an inverter of a vector control system is used as the electric motor.

In the invention, a general-purpose induction motor is used to hold down costs required for preparing a motor and poor speed controllability due to occurrence of slip according to a load, which is inevitable in an induction motor, is compensated by utilizing the inverter of the vector control system to thereby perform speed control with good responsibility and high accuracy.

That is, since a slip ratio of the induction motor changes according to a load, its rotation speed changes according to the load even if an excitation frequency is constant. Moreover, in the electric actuator in accordance with the invention, the spring is caused to contract and extend as the movable portions moves, an elastic force generated by the spring changes as the movable portions moves, even if a driving force of the actuator is constant, whereby a load of the induction motor also changes. As a result, it is preferable to take some measure for maintaining a constant rotation speed of the actuator driven by the induction motor. In order to offset this disadvantage, the inverter of the vector control system is employed. That is, the vector control in the inverter can offset this disadvantage because it is a control method capable of correcting slip of the induction motor to thereby keep the rotation speed constant.

In addition, since it is difficult to employ the mechanical brake when a general Induction motor driven by the inverter of the vector control system is used under conditions in which rotation and stoppage of the motor are repeated at high frequency (i.e., quick stop is required at high frequency), the induction motor is quickly stopped by utilizing a regenerative resistance.

However, if the regenerative resistance is utilized, an energy loss occurs every time the induction motor stops. Thus, in the invention, the kinetic energy of the movable portions is absorbed and accumulated by the energy accumulating means, whereby the rotation of the motor can be effectively stopped and the occurrence of the energy loss can be prevented without using an electric brake that utilizes the regenerative resistance.

In addition, an electric actuator in accordance with a ninth aspect of the invention is the electric actuator according to any one of the third to the eighth aspects, by a position controlling deivce provided in parallel with the spring, which measures an axial force applied to a member driving the guide member together with the spring and an axial force applied to a member for collectively receiving forces of the member and the spring and directly acting on a loading portion, obtains a stroke of the spring based on the measured values and feeds it back to the speed control of the motor.

According to the invention, forces applied to the two members are measured and fed back to the actuation stroke, whereby it becomes possible to improve actuation accuracy of the electric actuator.

BRIEF DESCRIPTION OF THE DRAWINGS

The invention will be apparent from the following descriptions taken in conjunction with the accompanying drawings, in which like reference characters designate the same or similar parts throughout the figures thereof, and wherein:

Fig. 1 is a schematic view showing a linear actuator in accordance with an embodiment of the present invention, which is used as driving means of a pressurizing cylinder;
Figs. 2A to 2C are explanatory views showing a relationship between a driving force generated by an electric motor and an elastic force generated by a coil spring, in the linear actuator shown in Fig. 1;
Fig. 3 is a schematic view showing an example of an application of the linear actuator shown in Fig. 1; and
Fig. 4 is a schematic view showing another example of an application of the linear actuator shown in Fig. 1.

DETAILED DESCRIPTION OF THE PREFERRED EMBODIMENTS

Exemplary embodiments of the invention will hereinafter be described with reference to the accompanying drawings. Further, dimensions, materials and shapes of components and their relative arrangements described in the embodiments are not intended to limit the scope of the invention to them unless specifically described otherwise. Here, portions identical with or equivalent to those of the conventional art are denoted by identical reference symbols and detailed descriptions of these portions are omitted.

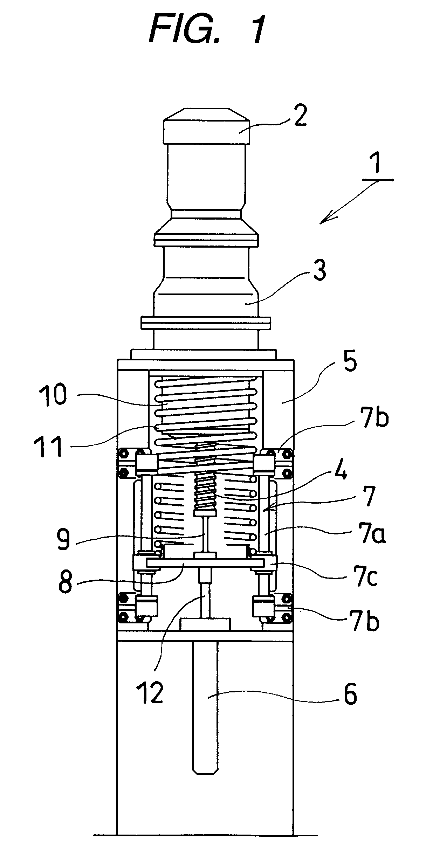

Fig. 1 shows a linear actuator 1 in accordance with an exemplary embodiment of the invention, which is used as driving device of a cylinder of an injection molding machine (injection cylinder or the like) or a plunger pump (hereinafter referred to as a pressurizing cylinder). The linear actuator 1 uses a reduction gear in which an input shaft and an output shaft are positioned coaxially, such as an epicycle reduction gear, as a reduction gear 3, so that axes of an electric motor 2, the reduction gear 3 and a ball screw 4 are arranged on the same straight line. In this way, a rotor shaft of the electric motor 2 and a rotational shaft of the reduction gear 3 are formed as hollow shafts, and the ball screw 4 penetrating through the hollow shafts is moved in the axial direction (an output is obtained as a linear motion).

In addition, the electric motor 2 and the reduction gear 3 are integrally fixed, and the reduction gear 3 is further fixed to a frame 5. The frame 5 extends in the axial direction and supports a pressurizing cylinder 6 such that it shares an axis with the ball screw 4. Moreover, the frame 5 is provided with a slide guide 7 in the axial direction. The slide guide 7 has a plurality of (four in this embodiment) guide bars 7a formed parallel to the axial direction, which are fixed to the frame 5 at brackets 7b, and slide bearings 7c that are guided by respective guide bars 7a and slide in the axial direction. Each slide bearing 7c slidingly supports a plate-like guide member 8 while keeping it perpendicular to each guide bar 7a.

Moreover, the tip of the ball screw 4 and the guide member 8 are fixed via a flexible shaft 9. Further, a coil spring 11 is disposed so as to engage with a reduction gear casing 10 at its one end in a manner surrounding a lower part of the reduction gear casing 10, and to engage with the guide member 8 at the other end. In addition, as shown in the figure, the coil spring 11 has a diameter sufficient to cover the circumferences of the ball screw 4 and the flexible shaft 9 and a total length sufficient to give a slight pressure between the guide member 8 and the reduction gear casing 10 even in a forward limit position of the entire stroke of the guide member 8 supported by the slide guide 7. In the exemplary embodiment of the invention, the slide guide 7, the guide member 8 and the coil spring 11 constitute an energy accumulating device discussed below.

Further, the flexible shaft 9 can be used as a load cell by attaching a distortion gage or the like (not shown) to it. In addition, a plunger 12 of the pressurizing cylinder 6 is coupled with the guide member 8 via a coupling such as a ball joint (not shown).

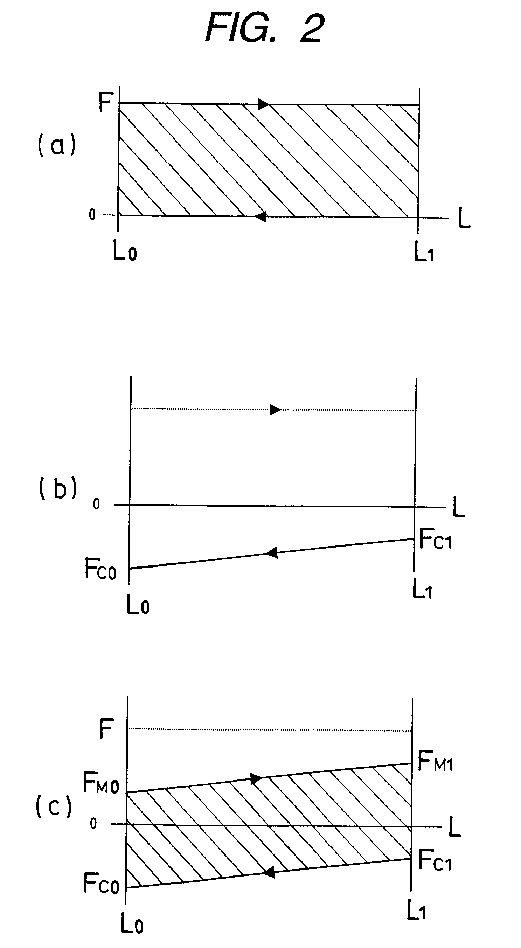

Here, a relationship between a driving force generated by the electric motor 2 and an elastic force generated by the coil spring 11 in driving the pressurizing cylinder 6 by the linear actuator 1 will be described with reference to Figs. 2A to 2C. Further, in Figs. 2A to 2C, an upper part with respect to a lateral axis representing a stroke L of the linear actuator 1 shows a magnitude of the driving force of the electric motor 2 and a lower part shows a magnitude of the elastic force of the coil spring 11.

Fig. 2A shows a driving force that is required of the electric motor 2 when the pressurizing cylinder 6 is driven only by the electric motor 2 without using the coil spring 11. In this case, a driving force of a fixed strength F is required of the electric motor 2 in the actuation stroke of from a backward limit position $L_0$ to a forward limit position $L_1$ in the entire stroke of the linear actuator 1. On the other hand, the driving force required of the electric motor 2 is substantially zero in the return stroke of from the forward limit position $L_1$ to the backward limit position $L_0$ in the entire stroke of the linear actuator 1.

On the other hand, in the forward limit position $L_1$ of the entire stroke of the linear actuator 1, the coil spring 11 provided between the reduction gear casing 10 and the guide member 8 of the linear actuator 1 generates an elastic force $F_{C1}$ acting in the direction of pushing the guide member 8 toward its forward limit position, as shown in Fig. 2B. Then, the coil spring 11 contracts in the return stroke of from the forward limit position $L_1$ to the backward limit position $L_0$, whereby the elastic force of the coil spring 11 increases so that an elastic force $F_{C0}$ ($F_{C1} < F_{C0}$) acting in the direction of pushing the guide member 8 toward its forward limit position is generated in the backward limit position $L_0$.

The driving force generated by the electric motor 2 and the kinetic energy of the movable portions (the rotor of the electric motor 2, the reduction gear 3, the ball spring 4 and the like) of the linear actuator 1 and all the members moving in cooperation therewith are absorbed and accumulated in the return stroke in which the driving force required of the electric motor 2 should be reduced to "almost zero" as described above, whereby the elastic force of the coil spring 11 is increased. Therefore, the coil spring 11 constitutes the energy accumulating device for accumulating the elastic force generated in this way. In addition, the energy accumulating device releases the energy accumulated in the coil spring 11 as suitable driving energy during the actuation stroke of the linear actuator 1.

As described above, the elastic force generated by the coil spring 11 assists the electric motor 2. As a result, the driving force actually required of the electric motor 2 is $F_{M0}$ ($F_{M0} = F - F_{C0}$) in the backward limit position $L_0$ of the entire stroke of the linear actuator 1 and is $F_{M1}$ ($F_{M1} = F - F_{C1}$) in the forward limit position $L_1$. In addition,. energy generated only by the electric motor 2 shown by a shaded portion in Fig. 2A and a sum of energy generated by electric motor 2 and the coil spring 11 shown by shaded portions in Fig. 2C are equivalent.

Operational effects realized by the exemplary embodiment of the invention having the above-mentioned configuration are as described below. First, the linear actuator 1 in accordance with the exemplary embodiment of the invention can absorb and accumulate by the energy accumulating device the energy generated by the electric motor 2 and the kinetic energy generated by the movable portions when they stop, in the return stroke ($L_1$ to $L_0$) in which the linear actuator 1 is in the low load operation state. Therefore, it becomes possible to reduce a braking force required for stopping the movable portions in the return stroke (or to make it almost negligible). Thus, it becomes possible to cause the movable portions of the linear actuator 1 to quickly stop while eliminating the necessity of giving a braking force by an electric or mechanical brake or the like as required conventionally and of providing a configuration designed for giving a braking force in a reliable manner, such as one provided as a measure against heat generation.

In addition, the energy accumulating means can accumulate the kinetic energy generated by the movable portions when they stop in the return stroke of the linear actuator 1 without wasting the energy. In addition, since the coil spring 11 extends in the actuation stroke ($L_0$ to $L_1$) of the linear actuator 1, the energy accumulating means can release the energy accumulated in the coil spring 11 as operation energy. Thus, an efficient operation becomes possible by reducing an energy loss that is caused by releasing the kinetic energy accumulated in the movable portions of the linear actuator 1 which is emitted as heat when they stop as is conventionally the case. The shorter a cycle time of the reciprocation of the linear actuator 1, the more remarkable such an effect of improving operation efficiency becomes.

Further, the driving force required of the electric motor 2 can be reduced from F to $F_{M0}$ ($F_{M0} = F - F_{C0}$)

in the backward limit position $L_0$ and from F to $F_{M1}$ ($F_{M1}$=F-$F_{C1}$) in the forward limit position $L_1$ of the entire stroke of the linear actuator 1. Thus, the specification of the electric motor 2 can be simplified by reducing a load in the actuation stroke, which is conventionally relied upon as a reference in securing mechanical strength and a durable life of the electric motor 2. In addition, since a load applied to each portion of the linear actuator 1 in the actuation stroke and the return stroke is more leveled compared with the conventional art, the specification of the entire linear actuator 1 can also be simplified.

Moreover, although a large output is required of the electric motor 2 in the backward limit position $L_0$ of the entire stroke of the linear actuator 1 in order to accelerate the electric motor 2 to a predetermined number of revolutions in a short time, the elastic force of the coil spring 11 is at a maximum in the backward limit position $L_0$ so that electric energy that needs to be applied to the electric motor 2 when starting can be reduced. Therefore, it is possible to suppress generation of heat even when starting the electric motor 2 from the backward limit position $L_0$, which usually involves a large amount of heat generation. As a result, measures for diffusing and removing heat generated by the electric motor 2 can be simplified.

In addition, in the exemplary embodiment of the invention, the tip of the ball screw 4 and the guide member 8 are fixed via the flexible shaft 9. Thus, a positional dislocation that is caused when the ball screw 4 and the guide member 8, which are separately constituted based on different assembly standards, are combined with each other, can be absorbed only by flexure of the flexible shaft 9. Further, it becomes possible to surely couple the ball screw 4 and the guide member 8 with each other without applying stress on either of them, thereby ensuring reliable transmission of forces between the ball screw 4 and the guide member 8.

Therefore, if the linear actuator 1 is used as a driving device such as those for a pressurizing cylinder or the like of an injection molding machine as in the embodiment of the invention, the kinetic energy generated by the movable portions of the linear actuator 1 when they stop is absorbed and accumulated by the energy accumulating device when stopping the linear actuator 1 in a backward stroke of the pressurizing cylinder. Thus, a braking force required for stopping the movable portions can be reduced (or made almost negligible). As a result, it becomes possible to simplify a configuration for giving a braking force in a backward limit position of the pressurizing cylinder of the injection molding machine and to cause the pressurizing cylinder to stop quickly. In addition, the energy accumulated in the return stroke of the linear actuator 1 is released as operation energy in the actuation stroke, whereby the electric motor 2 can be accelerated to a predetermined number of revolutions in a short time to thereby shorten a cycle time of injection molding, while reducing electric energy that needs to be applied when starting a forward movement of the pressurizing cylinder.

Moreover, if the flexible shaft 9 is used as a load cell by attaching a distortion gage or the like to it, the flexible shaft 9 is formed with a minimum necessary diameter using a high-quality material and by a highly accurate machining process so that it can display a predetermined function. Thus, stress (distortion) by an axial force acting on the flexible shaft 9 is large and a load cell with high sensitivity can be consequently constituted. In addition, the flexible shaft 9 is produced under a particularly well-controlled environment in order to realize the above-mentioned quality level. Thus, since attaching of the distortion gauge is also carried out carefully under the same environment and procedures, a high quality of the lead cell is reliably attained, and since calibration also becomes easy, a highly accurate load cell can be realized.

Consequently, even if control to maintain a constant discharge pressure is required of the linear actuator 1 as a driving device for the cylinder of the injection molding machine in order to respond to, with a high responsiveness, a change in a physical property of injection liquid or a change in operating conditions such as a discharge pressure, the linear actuator 1 can sufficiently cope with such a requirement by the provision of a highyly sensitive, highly accurate and high quality load cell.

Further, it is also possible to obtain a large output when the linear actuators 1 in accordance with the exemplary embodiment of the present invention are used by being arranged in parallel depending on a purpose of use. In addition, it is also possible to make a spring constant of the coil spring 11 nonlinear. Moreover, it is also possible to dispose the coil spring 11 between the guide member 8 and the pressurizing cylinder 6 in stead of disposing it between the reduction gear casing 10 and the guide member 8, to thereby absorb and accumulate kinetic energy of the movable portions by the extension of the coil spring 11.

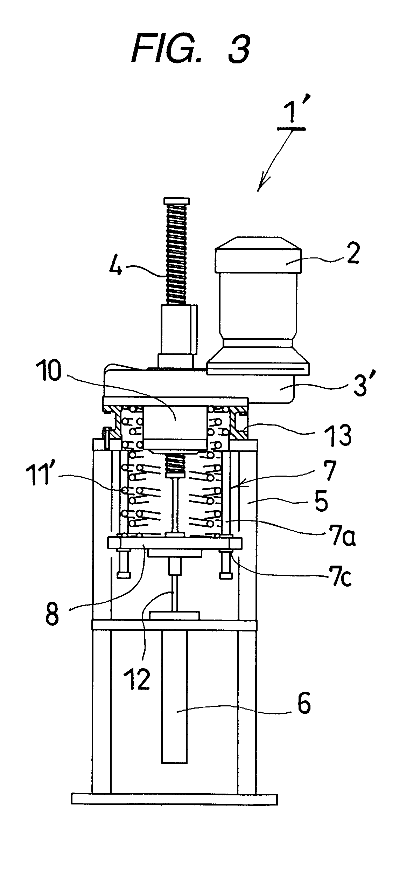

Now, Fig. 3 shows an example of an application of the linear actuator 1 shown in Fig. 1. In Fig. 3, portions identical with or equivalent to those of Fig. 1 are denoted by identical reference symbols and detailed descriptions of the portions are omitted.

A linear actuator 1' shown in Fig. 3 uses a spur gear as a reduction gear 3', which is a difference from the linear actuator 1 of Fig. 1, whereby the axis of the electric motor 2 is offset with respect to the axis of the ball screw 4. In addition, all of the electric motor 2, the reduction gear 3', the ball spring 4, the reduction gear casing 10, the slide guide 7, the guide member 8 and a coil spring 11' are integrally fixed by means of an intermediate casing 13. Further, such an integral portion is integrally to the frame 5 supporting the pressurizing cylinder 6, with its axis coinciding with that of the ball screw 4. Moreover, the coil spring 11' consists of three coil springs arranged coaxially to overlap with each other in order to secure a necessary elastic force.

According to the linear actuator 1' shown in Fig. 3, since all of the electric motor 2, the reduction gear 3', the ball screw 4, the reduction gear casing 10, the slide guide 7, the guide member 8 and the coil spring 11' are integrally fixed with respect to the intermediate casing 13 so that the integral portion is attachable to the frame 5 that supports the pressurizing cylinder 6 functioning as the driven member. Therefore, it becomes possible to perform assembly, transportation, maintenance and the like of the linear actuator 1' independently from the pressurizing cylinder 6. Thus, a linear actuator that is excellent in both ease of handling and flexibility can be provided. Detailed descriptions will be omitted concerning other operational effects that are the same as those of the linear actuator 1 in Fig. 1.

Moreover, operational effects described below can be realized by employing an induction motor, which is driven by an inverter of a vector control system, in the electric motor 2 as an example of an application applicable to both of the linear actuators 1 and 1' shown in Figs. 1 and 3, respectively.

First, a general-purpose induction motor is used as the electric motor 2, whereby it becomes possible to hold down costs required for preparing a motor and to compensate poor speed controllability due to an occurrence of slip according to a load, which is inevitable in an induction motor, by utilizing the inverter of the vector control system, thereby realizing speed control with good responsibility and high accuracy.

That is, since a slip ratio of the induction motor changes according to a load, the rotation speed fluctuates according to a load even if an excitation frequency is constant. Moreover, in the linear actuators 1 and 1', the coil springs 11 and 11' contract or extend as the above-mentioned movable portions move. Thus, an elastic force generated by the coil springs 11 and 11' changes as the movable portions move, even if a driving force of the actuators 1 and 1' is constant, so that the load of the electric motor 2 also changes. As a result, it is preferable to take some measures for maintaining a constant rotational speed of the linear actuators 1 and 1', which are driven by the electric motor 2 functioning as the induction motor. In order to remove this disadvantage, the inverter of the vector control system is applied. Since the vector control in the inverter is a control method for making it possible to correct slip of an induction motor to maintain a constant rotational speed, this disadvantage can be offset.

In addition, since it is difficult to employ a mechanical brake when a general induction motor driven by the inverter of the vector control system is used under conditions in which rotation and stoppage of the motor are repeated at a high frequency (i.e., quick stop is required at high frequency), the induction motor is quickly stopped by a regenerative resistance. However, it is evident that an energy loss occurs every time the induction motor stops if the regenerative resistance is used.

However, in the embodiment of the invention, the kinetic energy of the movable portions is absorbed and accumulated by the energy accumulating device, whereby the rotation of the motor 2 can be effectively stopped without using an electric brake that utilizes the regenerative resistance, so that the occurrence of the energy loss can be prevented. Thus, it becomes possible to obtain highly efficient linear actuators 1 and 1' by using the induction motor in a power source.

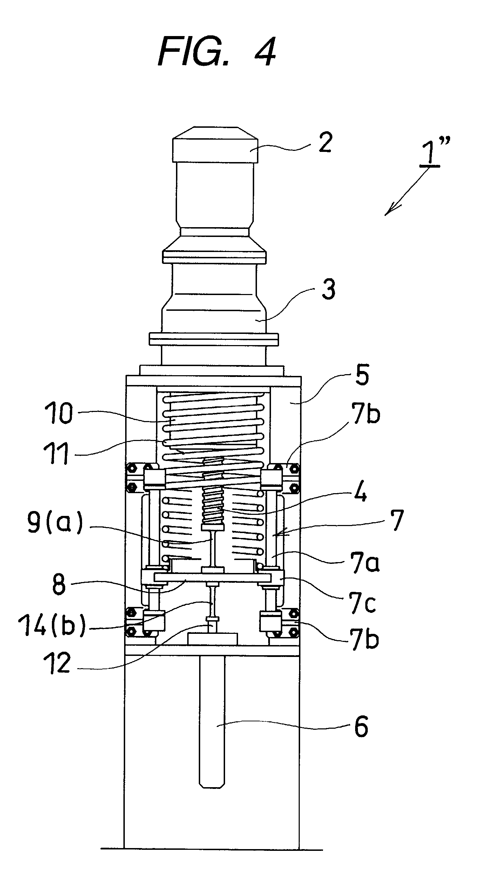

In addition, as shown in Fig.4, it is also possible to employ a position controlling device constituted as described below as a further example of an application of the exemplary embodiment of the invention, to thereby further improve an actuation accuracy of a linear actuator 1".

A position controlling device of the linear actuator 1" includes a member "a" (the flexible shaft 9 in the example of Fig. 4) provided parallel to the coil spring 11, which cooperates with the coil spring 11 to drive the guide member 8, and a member "b" (a flexible shaft 14 in the example of Fig. 4) which receives forces applied by both the member "a" and the coil spring 11 and directly acts on a pressurizing cylinder functioning as a loading portion. Further, the flexible shaft 14 is provided between the guide member 8 and the plunger 12 and can be used as a load cell by attaching a distortion gage or the like (not shown) as in the flexible shaft 9. In addition, the position controlling means of the linear actuator 1" also includes a control device (not shown) for measuring an axial force Fa applied to the member a functioning as the load cell and an axial force Fb applied to the member "b" also functioning as the load cell, to perform the following arithmetic operation.

Incidentally, when it is assumed that a spring constant of the coil spring 11 is K and a stroke is X, the following relationship is established between the axial force applied to the member a and the axial force Fb applied to the member "b":

$$Fb = Fa + K \times X \tag{1}$$

If the expression (1) is transformed, the following expression can be obtained:

$$X = (Fb - Fa) / K \tag{2}$$

Therefore, it is possible to first measure Fa and Fb and then carry out an arithmetic operation in accordance with the expression (2) to thereby obtain a spring stroke X, that is, an actuation stroke of the actuator. Then, when the obtained spring stroke X is compared against an instructed value set in advance and fed back to speed control of the electric motor 2, the actuation stroke of the linear actuator 1" can be controlled accurately and easily. Note that the above-mentioned operational effects can be realized by using the above-mentioned general-purpose induction motor also as the electric motor 2 of the linear actuator 1".

Further, although detailed descriptions will be omitted, it is also possible to apply the energy accumulating device in accordance with the exemplary embodiment of the invention to an electric rotary actuator. Moreover, the energy accumulating device can be applied to an actuator in which a driving force of the electric motor 2 is transmitted not through a reduction gear but directly to the ball screw 4.

Since the invention is constituted as described above, effects as described below are realized. First, according to the electric actuator in accordance with the first aspect of the invention, it becomes possible to provide an electric actuator that is structured simply, low in costs and high in energy efficiency and is capable of realizing frequent activation and stop.

In addition, according to the electric actuator in accordance with the second aspect of the invention, energy generated by an electric motor and kinetic energy generated by movable portions when they stop in a return stroke of the actuator are absorbed by the energy accumulating device and are released as operation energy in an actuation stroke. Thus, it becomes possible to provide an electric actuator that is structured simply, low in costs and high in energy efficiency and is capable of realizing frequent activation and stoppage.

In addition, according to the electric actuator in accordance with the third aspect of the invention, an energy accumulating means is constituted by a spring, a guide member and a slide guide that slidingly supports the guide member. Energy generated by an electric motor and kinetic energy generated by movable portions when they stop in a return stroke of the actuator are absorbed, and are released as operation energy in an actuation stroke. Thus, it becomes possible to provide an electric actuator that is structured simply, low in costs and high in energy efficiency and is capable of realizing frequent activation and stoppage.

In addition, according to the electric actuator in accordance with the fourth aspect of the invention, kinetic energy and the like of the movable portions including the ball screw in the return stroke of the actuator is absorbed by the contraction of the spring. On the other hand, in the actuation stroke of the actuator, the energy accumulated in the spring is released as operation energy of the movable portions when the spring extends. Thus, it becomes possible to provide an electric actuator that is structured simply, low in costs and high in energy efficiency and is capable of realizing frequent activation and stoppage.

In addition, according to the electric actuator in accordance with the fifth aspect of the invention, the ball screw and the guide member are surely coupled with each other by the flexible shaft without imposing stress on either of them, thereby ensuring reliable transmission of forces between the ball spring and the guide member. Thus, it becomes possible to provide an electric actuator that is structured simply, low in costs and high in energy efficiency and is capable of realizing frequent activation and stoppage.

Further, according to the electric actuator of the sixth aspect of the invention, it becomes possible to cope with a requirement of high operation accuracy.

Moreover, according to the electric actuator in accordance with the seventh aspect of the invention, the actuator is detachably attachable to the driven member integrally, whereby an electric actuator that is excellent in both ease of handling and flexibility (general-purpose properties) can be provided.

In addition, according to the electric actuator in accordance with the eighth aspect of the invention, it becomes possible to establish a highly efficient actuator using an induction motor as a power source.

In addition, according to the electric actuator in accordance with the ninth aspect of the invention, it becomes possible to control an actuation stroke accurately and easily.

Thus, it is seen that an electric actuator is provided. One skilled in the art will appreciate that the invention can be practiced in a form other than the preferred exemplary embodiments which are presented for the purposes of illustration and not of limitation, and the invention is limited only by the claims which follow.

## Claims

1. An electric actuator which performs a reciprocating motion, comprising:

   energy accumulating means that absorbs and accumulates, by use of a spring, energy generated by an electric motor and kinetic energy generated by movable portions of the actuator when they stop, during a low load operation of the actuator.

2. An electric actuator according to claim 1, wherein the energy accumulating means accumulates energy generated by the electric motor and kinetic energy generated by the movable portions when they stop in a return stroke of the actuator and releases the accumulated energy as operation energy in an actuation stroke of the actuator.

3. An electric actuator according to claim 1, wherein the energy accumulating means is supported by a slide guide in the axial direction and comprises:

   a guide member which is fixed to a tip of a ball screw driven by the electric motor and moves in the axial direction; and
   a spring whose one end is engaged with the guide member.

4. An electric actuator according to claim 3, wherein the spring is disposed between the guide member and a casing of a reduction gear for decelerating power of the electric motor and transmitting it to the ball screw or a member fixed to the casing.

5. An electric actuator according to claim 3, wherein the tip of the ball screw and the guide member are fixed via a flexible shaft.

6. An electric actuator according to claim 5, wherein the flexible shaft is used as a load cell.

7. An electric actuator according to claim 1, wherein the actuator is integrally attachable to the driven member.

8. An electric actuator according to claim 1, wherein an induction motor driven by an inverter of a vector control system is used as the electric motor.

9. An electric actuator according to claim 3, comprising:

> position controlling means provided in parallel with the spring, which measures an axial force applied to a member driving the guide member together with the spring and an axial force applied to a member collectively receiving forces of the member and the spring and directly acting on a loading portion, obtains a stroke of the spring based on the measured values and feeds it back to the speed control of the motor.

# FIG. 1

# FIG. 2

(a)

(b)

(c)

# FIG. 3

# FIG. 4

**European Patent Office**

**EUROPEAN SEARCH REPORT**

Application Number

EP 02 00 8145

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 980 235 A (EPPICH STEFAN ET AL) 9 November 1999 (1999-11-09) * the whole document * | 1-8 | H02K7/06 F16H25/20 B29C45/50 |
| A | GB 2 149 877 A (ELDRIDGE JOHN LAWRENCE) 19 June 1985 (1985-06-19) * abstract; figures * | 1-8 | |

TECHNICAL FIELDS SEARCHED (Int.Cl.7)

B29C
H02K
F16H

The present search report has been drawn up for all claims

| Place of search | Date of completion of the search | Examiner |
|---|---|---|
| THE HAGUE | 2 August 2002 | Ramos, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 02 00 8145

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2002

| Patent document cited in search report | | Publication date | Patent family member(s) | Publication date |
|---|---|---|---|---|
| US 5980235 | A | 09-11-1999 | AT        50696 A<br>WO      9734757 A1<br>DE    29719502 U1 | 15-07-1997<br>25-09-1997<br>29-01-1998 |
| GB 2149877 | A | 19-06-1985 | NONE | |

For more details about this annex : see Official Journal of the European Patent Office, No. 12/82